# EUROPÄISCHE PATENTSCHRIFT

(11) **EP 0 985 108 B1**
(45) Veröffentlichungstag und Bekanntmachung des Hinweises auf die Patenterteilung: **25.02.2004**
(21) Anmeldenummer: 97922798.0
(22) Anmeldetag: 02.06.1997
(51) Int. Cl.: F16J 15/26

(54) **DICHTELEMENT FÜR TROCKENLAUFSYSTEME UND VERWENDUNG EINES SOLCHEN DICHTELEMENTS**
SEALING ELEMENT FOR DRY-RUNNING SYSTEMS AND THE USE THEREOF
ELEMENT D'ETANCHEITE POUR SYSTEMES DE MARCHE A SEC ET UTILISATION D'UN ELEMENT D'ETANCHEITE DE CE TYPE

(43) Veröffentlichungstag der Anmeldung: 15.03.2000
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: PCT/CH1997/000221
(87) Internationale Veröffentlichungsnummer: WO 1998/055783

(56) Entgegenhaltungen:
- EP-A- 0 133 786
- WO-A-87/05076
- CH-A- 439 897
- DE-A- 3 117 603
- DE-B- D2 108
- US-A- 3 588 125
- US-A- 4 432 925

## Beschreibung

Die Erfindung betrifft ein Dichtelement für Trockenlaufsysteme, insbesondere trockenlaufende Kolbenkompressoren, gemäss dem Oberbegriff des unabhängigen Anspruchs 1, sowie dessen Verwendung für trockenlaufende Kolbenkompressoren. Eine derartige Dichtung ist aus der CH - A - 439 897 bekannt.

Dichtelemente für Trockenlaufsysteme, wie beispielsweise trockenlaufende Kolbenkompressoren zur ölfreien Verdichtung von Gasen, dienen der Abdichtung einer Druckdifferenz zwischen einer Hochdruck- und einer Niederdruckseite des Systems, wobei auf eine Fremdschmierung, z. B. mittels Öl, verzichtet wird. Da eine solche Art der Abdichtung auf trockener Reibung basiert, unterliegen Dichtelemente in Trockenlaufsystemen im Betriebszustand üblicherweise einem natürlichen Verschleiss, der ihre Lebensdauer - auch als Standzeit bezeichnet - beschränkt.

Dichtelemente für Trockenlaufsysteme werden heute hauptsächlich aus Kunststoff, beispielsweise aus gefüllten Polymeren, hergestellt. Ein häufig verwendetes Polymer-Material ist beispielsweise Polytetrafluorethylen (PTFE). In die PTFE-Matrix werden Füllstoffe wie amorpher Kohlenstoff, Grafit, Glasfasern, Metalle, Keramik oder Festschmierstoffe, eingebracht.

In einem trockenlaufenden Kolbenkompressor werden Dichtelemente zur Abdichtung der Kolbenstange und/oder als Kolbenringe zur Abdichtung des Kolbens verwendet. Der Gegenlaufpartner des Dichtelements, womit die relativ zum Dichtelement bewegte Fläche bezeichnet wird, ist im ersten Fall die Kolbenstange und im zweiten Fall die innere Wandung des Zylinders, die sogenannte Zylinderlaufbahn.

Die Leistungsfähigkeit eines Dichtelements in einem Trockenlaufsystem wird häufig durch den sogenannten pv-Wert charakterisiert. Dieser Wert ist das Produkt aus dem Anpressdruck (p), mit welchem das Dichtelement gegen den Gegenlaufpartner gedrückt wird, und der Reibgeschwindigkeit (v) mit der sich das Dichtelement relativ zu seinem Gegenlaufpartner bewegt. Für einen trockenlaufenden Kolbenkompressor, auf welchen im folgenden als repräsentatives Beispiel für ein Trockenlaufsystem Bezug genommen wird, ist unter dem pv-Wert das Produkt aus mittlerer abzudichtender Druckdifferenz (p) und mittlerer Kolbengeschwindigkeit (v) zu verstehen.

In der Praxis ist es für den Betrieb trockenlaufender Kolbenkompressoren wünschenswert, ein leistungsfähiges Dichtelement zu haben, das möglichst grossen pv-Werten möglichst lange standhalten kann. Dabei sollen die Leckraten entlang des Dichtelements sehr gering sein. Ferner sollen die Dichtelemente eine möglichst lange Standzeit haben, das heisst ihre dichtenden Eigenschaften sollen über eine möglichst lange Betriebsdauer im wesentlichen unverändert gut bleiben.

Insbesondere zur Erhöhung der Standzeit werden üblicherweise sowohl zur Kolbenstangen-Dichtung als auch zur Kolbendichtung mehrere Dichtelemente in axialer Richtung hintereinander angeordnet und bilden einen Dichtelementsatz. Für die Kolbenstangen-Dichtung wird ein Bauteil, das einen solchen Dichtelementsatz enthält, als Packung bezeichnet.

Auch ist es zur Erhöhung der Standzeit bekannt, durch spezielle Schnittformen des Dichtelements eine Verschleisskompensation vorzusehen. In der CH 439 897 wird beispielsweise eine Packung zur Kolbenstangen-Dichtung mit mehreren jeweils segmentierten Dichtringen offenbart, wobei die Schnittlinien zwischen den einzelnen Segmenten eines Dichtrings etwa tangential zur inneren Mantelfläche des Dichtrings verlaufen. Eine den Dichtring umfassende Schlauchfeder erzeugt eine Vorspannung und drückt die einzelnen Segmente gegen die Kolbenstange. Der durch Materialabrieb bedingte Verschleiss wird dadurch kompensiert, dass die einzelnen Segmente durch den auf ihnen in Richtung der Kolbenstange lastenden Druck nachgeschoben werden.

Für den maximalen pv-Wert, dem eine solche Packung im Dauerbetrieb standhalten kann, ist aber in erster Linie nicht die Anzahl der Dichtelemente einer Packung massgebend, sondern die Leistungsfähigkeit eines einzelnen Dichtelements. Es ist nämlich bekannt, dass die Verteilung der abzudichtenden Druckdifferenz auf die verschiedenen Dichtelemente des Dichtelementsatzes üblicherweise nicht gleichmässig ist. In der Praxis kann der realistische Extremfall sogar so aussehen, dass die gesamte Druckdifferenz im wesentlichen nur durch eines der Dichtelemente abgedichtet wird.

Üblicherweise werden heute Dichtringe für trockenlaufende Kolbenkompressoren mit einer axialen Ringhöhe von mindestens 7 mm hergestellt. Diese minimale Höhe beruht zum einen auf der Überlegung, dass bei kleineren Ringhöhen die Reibfläche des Dichtrings zu klein wird und somit seine Dichtwirkung zu schlecht wird, sodass bei typischen Druckdifferenzen von beispielsweise 40 bar die Leckrate unvertretbar grosse Werte annehmen würde. Zum anderen ist diese minimale Dicke dadurch motiviert, dass der Dichtring auch mechanisch genügend stabil sein muss, um den Belastungen ohne wesentliche, das heisst die Dichtwirkung erheblich beeinflussende, Deformation standzuhalten. Insbesondere das häufig als Dichtring-Material verwendete PTFE weist bekanntermassen eine ausgeprägte Kriechneigung (hoher Kaltfluss) auf, so dass bei Differenzdrücken von beispielsweise 40 bar ein zusätzlicher Stützring zur Vermeidung von Deformationen des Dichtrings vonnöten ist.

Die meisten der zur Verschleisskompensation segmentierten Dichtringe besitzen zwar in radialer Richtung einen gasdichten Schnittverlauf, die üblichen Schnittführungen erzeugen jedoch in axialer Richtung offenen Spalte und Stösse, die durch einen zusätzlichen Deckring abgedichtet werden müssen. Dieser Deckring wird häufig dreiteilig, radial geschnittenen ausgestaltet und so mit dem eigentlichen Dichtring zu einem Dichtungsringpaar angeordnet, dass keine durchgängigen Spalte mehr vorhanden sind. Ein Fixierstift zwischen den beiden Ringen soll im Betrieb das Ausrichten der Ringstösse zu durchgängigen Spalten verhindern. Der Deckring weist üblicherweise die gleiche axiale Höhe auf wie der Dichtring. Solche bekannten Dichtungsringpaare erreichen typischerweise eine axiale Gesamthöhe von 18 mm und mehr. Diese Gesamthöhen beschränken die Anzahl von Dichtungsringpaaren, die in einer Packung mit vorgegebener Baulänge angeordnet werden können.

Eines der Hauptprobleme, die den maximalen pv-Wert begrenzen, dem ein Dichtring auf Dauer standhalten kann, ist die bei trockenlaufenden Dichtelementen auftretende Reibungswärme. Mit ansteigendem pv-Wert entstehen in den Reibflächen rasch so hohe Temperaturen, dass die heute häufig aus Kunststoff bestehenden Dichtelemente thermisch zerstört werden. Die Praxis zeigt, dass heute bekannte Dichtelemente für Trockenlaufsysteme bei pv-Werten von über etwa 140 bar·m/s sofort zerstört werden oder unbrauchbar kurze Standzeiten aufweisen. Bei einer mittleren Kolbengeschwindigkeit in einem trockenlaufenden Kolbenkompressor von 3.5 m/s ergibt sich damit eine maximale abdichtbare Druckdifferenz von 40 bar für ein Dichtelement.

Ausgehend von diesem Stand der Technik ist es eine Aufgabe der Erfindung, ein leistungsfähigeres Dichtelement für Trockenlaufsysteme, insbesondere für trockenlaufende Kolbenkompressoren, bereitzustellen. Das Dichtelement soll pv-Werten von deutlich mehr als 140 bar·m/s standhalten können und dabei eine lange Standzeit aufweisen, während derer die Dichtwirkung im wesentlichen gleich gut bleibt. Zudem soll das Dichtelement in einem Trockenlaufsystem auch die Abdichtung hoher Differenzdrücke bei sehr kleinen Leckraten ermöglichen und nur einen minimalen Verschleiss aufweisen.

Das diese Aufgabe lösende Dichtelement für Trockenlaufsysteme, insbesondere trockenlaufende Kolbenkompressoren, ist durch die Merkmale des unabhängigen Patentanspruchs 1 gekennzeichnet. Der erfindungsgemässe Dichtring weist eine axiale Höhe auf, die höchstens 5.5 mm, insbesondere zwischen 2 mm und 4.5 mm, beträgt.

Vollkommen überraschend ist hierbei die Feststellung, dass sich durch eine Reduktion der axialen Höhe des Dichtrings in Kombination mit der Schnittführung zwischen den Ringsegmenten die Leistungsfähigkeit des Dichtelements ganz erheblich steigern lässt. So zeigt die Praxis, dass das erfindungsgemässe Dichtelement problemlos und auf Dauer pv-Werten von über 800 bar·m/s standhält. Im Vergleich zu konventionellen Dichtelementen bedeutet dies, dass beispielsweise bei gleicher mittlerer Kolbengeschwindigkeit mit dem erfindungsgemässen Dichtelement eine mindestens fünfmal so hohe Druckdifferenz abdichtbar ist, ohne dass dabei die erzielbaren Leckrate wesentlich ansteigt. Auch zeigt es sich, dass der Verschleiss bei dem erfindungsgemässen Dichtelement im Betriebszustand erheblich geringer ist als bei bekannten Dichtelementen, woraus eine deutlich längere Standzeit resultiert, während derer die Dichtwirkung im wesentlichen gleich gut bleibt.

Aus fertigungstechnischen Gründen besteht der Dichtring vorzugsweise aus drei Ringsegmenten.

Ferner zeigt sich in Versuchen bei konstant gehaltenem pv-Wert, dass sich ein besonders günstiger Kompromiss zwischen Leckrate und Temperatur in der Reibfläche der Dichtung ergibt, wenn die axiale Höhe des Dichtrings etwa 4 mm beträgt.

Bevorzugt beträgt der Schnittwinkel, den die Schnittlinie zwischen zwei benachbarten Ringsegmenten mit der Tangente an die innere Mantelfläche des Dichtrings bildet, höchstens 45°, insbesondere höchstens 20°, weil dadurch zum einen eine sehr gute Dichtwirkung in axialer und radialer Richtung erzielbar ist, und weil sich zum anderen die Ringsegmente unter der Druckbelastung verschleisskompensierend verschieben.

Durch die spezielle Schnittführung des Dichtrings sind bereits im Neuzustand keine durchgängigen Spalte oder Stösse sowohl in radialer als auch in axialer Richtung vorhanden. Die Verschleisskompensation erfolgt bei dieser Schnittführung durch gegenseitiges Verschieben der Ringsegmente entlang der Schnittlinien bzw. den gemeinsamen Berührflächen. Durch diese Parallelverschiebung ergeben sich auch im fortgeschrittenen Verschleisszustand höchstens vernachlässigbar kleine Spalte zwischen den Ringsegmenten. Daraus resultiert der Vorteil, dass bei dem erfindunsgemässen Dichtelement keine zusätzlichen Deckringe vonnöten sind.

In einer besonders bevorzugten Ausgestaltung umfasst das erfindungsgemässe Dichtelement ferner einen Grundring zur Reduzierung der Leckrate, der vorzugsweise einstückig, insbesondere endlos,ausgestaltet ist. Dieser Grundring ist im Betriebszustand vorzugsweise in axialer Richtung benachbart zum Dichtring niederdruckseitig angeordnet und so bemessen, dass er bezüglich des Gegenlaufpartners berührungsfrei, aber mit möglichst geringem Spiel verläuft. Durch diesen Grundring lässt sich die Leckrate noch erheblich weiter reduzieren.

Der Grundring kann jedoch auch mehrteilig ausgestaltet sein, das heisst mehrere in seiner Umfangsrichtung benachbart angeordnete Segmente umfassen. Dies ist beispielsweise vorteilhaft, wenn der Grundring eingebaut werden soll, ohne dafür die Kolbenstange auszubauen, oder wenn der Grundring als Teil einer Kolbendichtung um den Kolben herum gelegt werden muss. Ist der Grundring mehrteilig ausgestaltet, so werden die einzelnen Segmente beispielsweise mittels einer umschliessenden Schlauchfeder zusammengehalten. Ferner ist die Schnittführung zwischen den einzelnen Segmenten des Grundrings derart, dass zum einen keine Verschleisskompensation möglich ist, und zum anderen der Grundring in radialer Richtung gasdicht ist. Dies lässt sich vorzugsweise realisieren, indem die Schnittlinen zwischen den Segmenten in radialer Richtung verlaufen, wobei kein Stossspiel zwischen den Segmenten vorgesehen ist.

Bevorzugt weist der Grundring eine axiale Höhe von höchstens 6 mm, insbesondere von etwa 4 mm, auf, damit das Dichtelement in axialer Richtung möglichst kompakt ist und wenig Platz in Anspruch nimmt.

In einer bevorzugten Ausführung sind der Dichtring und/oder der Grundring im wesentlichen aus einem Hochtemperaturpolymer wie Polyetheretherketon (PEEK), Polyimid (PI), Polyamidimid (PAI), Polyphenylensulfid (PPS) oder Epoxidharz (EP) hergestellt, weil solche Hochtemperaturpolymere aufgrund ihrer mechanischen Eigenschaften hohen Differenzdrücken im wesentlichen deformationsfrei standhalten und zudem eine hohe Warmfestigkeit aufweisen. Da der Grundring im Betriebszustand berührungsfrei bezüglich seines Gegenlaufpartners arbeitet, kann er auch aus anderen Materialien hergestellt werden, die eine gute Warmfestigkeit und für den ungeschmierten Betrieb zumindest Notlaufeigenschaften aufweisen, beispielsweise Bronze, Sintereisen oder Grafit.

Alternativ ist es aber auch möglich, den Dichtring und/oder der Grundring des Dichtelements aus einer technischen Keramik wie Aluminiumoxid, Zirkonoxid, Siliziumkarbid, Siliziumnitrid herzustellen. Dies ist insbesondere deshalb günstig, weil sich durch die hohe Abriebfestigkeit solcher Keramiken die Standzeit des Dichtelements noch wesentlich erhöhen lässt.

Aufgrund seiner hohen Leistungsfähigkeit und seines geringen Verschleisses eignet sich das erfindungsgemässe Dichtelement insbesondere für eine Packung zur Abdichtung einer trockenlaufenden Kolbenstange und für eine Kolbendichtung für einen trockenlaufenden Kolbenkompressor.

Insbesondere lässt sich das erfindungsgemässe Dichtelement zur Abdichtung der Kolbenstange und/oder des Kolbens in einem trockenlaufenden Kolbenkompressor verwenden, der bei pv-Werten von mehr als 140 bar.m/s betreibbar ist. Auch bei derart hohen pv-Werten lassen sich sehr lange Standzeiten erzielen. Dies ist besonders vorteilhaft, weil bisher bekannte Dichtelemente für einen solchen Hochleistungsbetrieb nicht geeignet sind.

Weitere vorteilhafte Massnahmen und bevorzugte Ausgestaltungen der Erfindung ergeben sich aus den abhängigen Ansprüchen.

Im folgenden wird die Erfindung anhand von Ausführungsbeispielen und anhand der Zeichnung näher erläutert. In der schematischen, nicht massstäblichen Zeichnung zeigen:
- Fig. 1: eine Aufsicht auf ein Ausführungsbeispiel eines Dichtrings des erfindungsgemässen Dichtelements,
- Fig. 2: eine Schnittdarstellung des Dichtrings aus Fig. 1 entlang der Schnittlinie II-II in Fig. 1,
- Fig. 3: eine Aufsicht auf ein Ausführungsbeispiel eines Grundrings,
- Fig. 4: eine Schnittdarstellung des Grundrings aus Fig. 3 entlang der Schnittlinie IV-IV in Fig. 3,
- Fig. 5: eine schematische Schnittdarstellung eines Ausschnitts einer Packung zur Kolbenstangen-Dichtung mit einem erfindungsgemässen Dichtelement, und
- Fig. 6: eine schematische Darstellung einer Kolbendichtung mit einem erfindungsgemässen Dichtelement im eingebauten Zustand (teilweise im Schnitt).

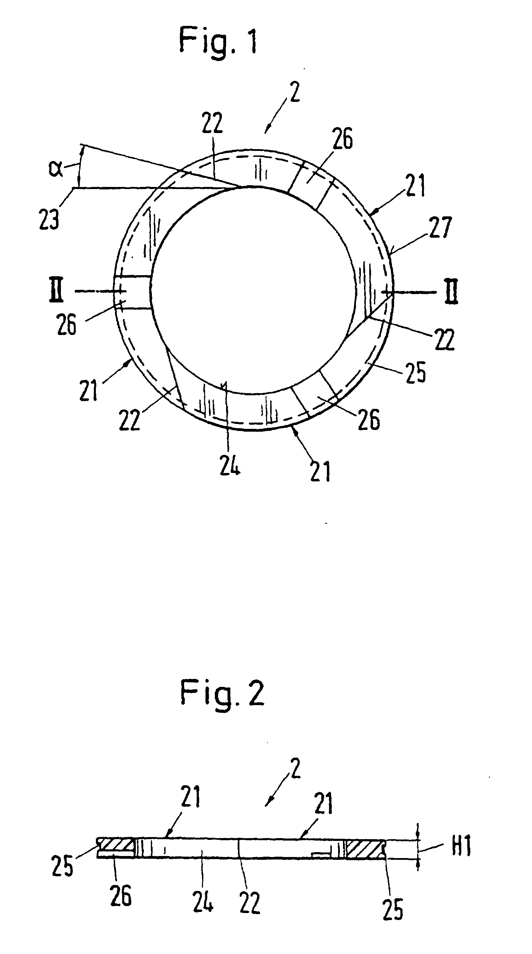

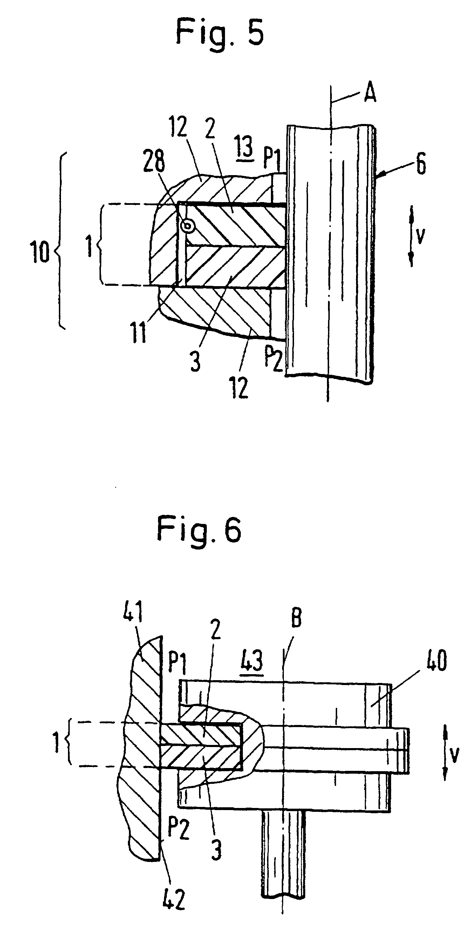

Fig. 5 zeigt in einer schematischen Schnittdarstellung einen Ausschnitt einer Packung 10 zur Kolbenstangen-Dichtung in einem trockenlaufenden Kolbenkompressor. Die Packung 10 weist ein besonders bevorzugtes Ausführungsbeispiel des erfindungsgemässen Dichtelements auf, welches gesamthaft mit dem Bezugszeichen 1 bezeichnet ist. Bei diesem Ausführungsbeispiel umfasst das Dichtelement 1 einen segmentierten Dichtring 2 sowie einen Grundring 3, die in axialer Richtung benachbart angeordnet sind. Fig. 1 zeigt eine Aufsicht auf ein Ausführungsbeispiel für den segmentierten Dichtring 2 im zusammengesetzten Zustand. Die Aufsicht erfolgt aus der axialen Richtung. In Fig. 2 ist dieser Dichtring 2 im Schnitt entlang der Linie II-II von Fig. 1 dargestellt.

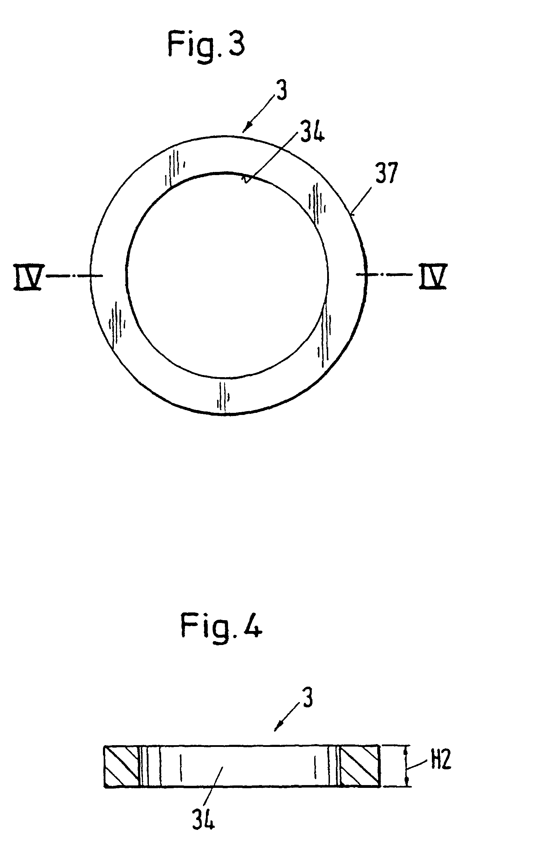

Fig. 3 zeigt ein Ausführungsbeispiel für den Grundring 3 des Dichtelements 1, ebenfalls in einer Aufsicht aus der axialen Richtung. Dieser Grundring 3 ist in Fig. 4 im Schnitt entlang der Linie IV-IV von Fig. 3 dargestellt.

Erfindungsgemäss umfasst der segmentierte Dichtring 2 mindestens zwei in seiner Umfangsrichtung benachbart angeordnete Ringsegmente 21. Bei dem in den Fig. 1 und 2 dargestellten Ausführungsbeispiel sind drei Ringsegmente 21 vorgesehen. Im zusammengesetzten Zustand des Dichtrings 2 berühren sich jeweils zwei benachbarte Ringsegmente 21 entlang einer Schnittlinie 22. Die Ringsegmente 21 sind so ausgestaltet, dass die Schnittline 22 zwischen benachbarten Ringsegmenten 21 jeweils mit einer Tangente 23 an die innere Mantelfläche 24 des Dichtrings 2 einen Schnittwinkel α bildet, der von 90° verschieden ist.

Erfindungsgemäss weist der Dichtring 2 eine axiale Höhe H1 auf, die höchstens 5.5 mm und insbesondere zwischen 2 mm und 4.5 mm beträgt. Mit der axialen Höhe H1 ist die maximale Ausdehnung gemeint, die der Dichtring 2 entlang seines Umfangs in axialer Richtung, das heisst in Richtung seiner Zylinderachse, aufweist.

Soll der Dichtring 2 zur Abdichtung einer Kolbenstange 6 (siehe Fig. 5) verwendet werden, so ist es von Vorteil, in seiner äusseren Mantelfläche 27 (Fig. 1, Fig. 2) eine Nut 25 vorzusehen, die sich in den Ringsegmenten 21 entlang des gesamten Umfangs des Dichtrings 2 erstreckt. Die Nut 25 ist in Fig. 1 durch die gestrichelte Kreislinie angedeutet. In die Nut 25 wird eine Schlauchfeder 28 (Fig. 5) eingelegt, welche den Dichtring 2 vollumfänglich umgibt. Die Schlauchfeder 28 bewirkt auf die Ringsegmente 21 eine gegen die Kolbenstange 6 hin wirkende vorspannung, welche insbesondere während der Anlaufphase der Kolbenstange 6 eine genügend grosse Dichtwirkung des Dichtrings 2 gewährleistet.

Optional kann der Dichtring 2 noch Rückströmnuten 26 aufweisen, durch welche sich z. B. während des Saughubs der Überdruck in der Packung in den Verdichtungsraum abbauen lässt. Die Rückströmnuten 26 erstrecken sich jeweils in radialer Richtung von der inneren Mantelfläche 24 zur äusseren Mantelfläche 27 und weisen in axialer Richtung eine Tiefe auf, die beispielsweise etwa ein Viertel der axialen Höhe H1 des Dichtrings 2 beträgt.

Der Grundring 3 (Fig. 3, Fig. 4) ist als einstückiger, endloser, das heisst ungeschnittener, Ring ausgestaltet, im Unterschied zum segmentierten Dichtring 2 gemäss Fig. 1 und Fig. 2. Der Grundring 3 hat beispielsweise eine rechteckige Querschnittsfläche, wie dies Fig. 4 zeigt. Der Grundring 3 hat eine axiale Höhe von höchstens 6 mm und insbesondere von etwa 4 mm. Der Grundring 3 ist so bemessen, dass er im eingebauten Zustand mit möglichst geringem Spiel, aber dabei berührungsfrei zu seinem Gegenlaufpartner verläuft.

Fig. 5 zeigt das Ausführungsbeispiel des erfindungsgemässen Dichtelements als Teil der Packung 10 zur Abdichtung der Kolbenstange 6 eines trockenlaufenden Kolbenkompressors. Im Betriebszustand bewegt sich die Kolbenstange 6 mit einer mittleren Kolbengeschwindigkeit v in Richtung ihrer Längsachse A hin und her, wie dies der mit dem Bezugszeichen v versehene Doppelpfeil symbolisch andeutet. Dabei dient die Packung 10 zur Abdichtung der Druckdifferenz p=p₁-p₂ zwischen der Hochdruckseite (Kompressionsraum 13), wo ein höherer Druck p₁ herrscht, und der Niederdruckseite, wo ein niedrigerer Druck p₂ herrscht. Die Packung 10 umfasst in an sich bekannter Weise mindestens eine Dichtungskammer 11, die von zwei Kammerringen 12 gebildet wird, welche zu dem zugeordneten Kompressionsraum 13 hin dichtend befestigt, beispielsweise verschraubt, sind. In der Dichtungskammer 11 ist das Dichtelement 1 mit dem Dichtring 2 und dem Grundring 3 vorgesehen, wobei der Grundring 3 niederdruckseitig des Dichtrings 2 angeordnet ist. Es versteht sich, dass die Packung 10 natürlich auch mehrere Dichtelemente 1 enthalten kann, die in Form einer Reihenschaltung, das heisst in axialer Richtung hintereinander, angeordnet sind. Dann sind auch mehrere Kammerringe 12 vorgesehen, sodass für jedes Dichtelement 1 ein eigener Dichtungsraum 11 zur Verfügung steht. Selbstverständlich kann die Packung 10 zusätzlich Drosselringe zum Abbau dynamischer Druckspitzen aufweisen.

Die Schlauchfeder 28 erzeugt eine Vorspannung, welche die Ringsegmente 21 gegeneinander und gegen die Kolbenstange 6 drückt. Somit ist insbesondere auch in der Anlaufphase des Kompressors oder in solchen Betriebszuständen, in denen keine bzw. nur eine sehr geringe Druckdifferenz p₁-p₂ herrscht, die den Dichtring 2 gegen die Kolbenstange 6 drückt, eine ausreichende Dichtwirkung zwischen der inneren Mantelfläche 24 des Dichtrings 2 und ihrem Gegenlaufpartner - der Kolbenstange 6 - gewährleistet.

Der einstückige, endlose Grundring 3 ist so bemessen, dass seine innere Mantelfläche 34 (Fig. 3, Fig. 4) die Kolbenstange 6 gerade nicht berührt. Er umgibt also die Kolbenstange 6 berührungsfrei aber mit möglichst geringem Spiel, sodass er nach dem Prinzip einer Spaltringdichtung arbeitet.

In einer ähnlichen Ausgestaltung ist das Dichtelement 1 auch für die Abdichtung eines Kolbens 40 (Fig. 6) eines trockenlaufenden Kolbenkompressors geeignet. Fig. 6 zeigt in einer schematischen, teilweise geschnittenen Darstellung eine Kolbendichtung für den Kolben 40 eines solchen Kompressors, die ein erfindungsgemässes Dichtelement 1 enthält. Der Kolben 40 bewegt sich im Betriebszustand mit einer mittleren Kolbengeschwindigkeit v in einem Zylider 41, dessen innere Wandung eine Zylinderlaufbahn 42 bildet, in Richtung seiner Längsachse B hin und her, wie dies der Doppelpfeil mit dem Bezugszeichen v symbolisch andeutet. Dabei erzeugt der Kolben 40 eine Druckdifferenz p=p₁-p₂ zwischen der Hochdruckseite (Kompressionsraum 43), wo der Druck p₁ herrscht, und der Niederdruckseite, wo der Druck p₂ herrscht. Zur Abdichtung dieser Druckdifferenz p ist das Dichtelement 1 als Kolbenring vorgesehen. Prinzipiell ist das Dichtelement 1 in sinngemäss gleicher Weise ausgestaltet, wie vorne bereits erläutert, also mit dem Dichtring 2 und dem Grundring 3. Jedoch dienen bei der Anwendung als Kolbendichtung die äusseren Mantelflächen 27 (Fig. 1) bzw. 37 (Fig. 3) des Dichtrings 2 bzw. des Grundrings 3 zur Abdichtung der Druckdifferenz p. Natürlich weist der Dichtring 2 bei seiner Verwendung zur Kolbendichtung keine Nut 25 und keine Schlauchfeder 28 auf. Es kann jedoch vorteilhaft sein, eine nicht dargestellte Spannfeder an der inneren Mantelfläche 24 des Dichtrings 2 zu hinterlegen, um in analoger Weise wie vorne erläutert eine Vorspannung zu erzeugen, welche die Ringsegmente gegeneinander und gegen den Gegenlaufpartner - die Zylinderlaufbahn 42 - zu drücken.

Der Grundring 3 ist so bemessen, dass er mit möglichst geringem Spiel aber berührungsfrei bezüglich der Zylinderlaufbahn 42 verläuft. Falls der Kolben 40 in gebauter Form ausgeführt ist, also mehrere einzelne Ringkammern umfasst, die bei der Montage abwechselnd mit den Kolbenringen zu dem Kolben 40 zusammengefügt werden, ist der Grundring 3 (Fig. 3, Fig. 4) bevorzugt auch hier einstückig, endlos ausgestaltet. Für die klassischen Nutenkolben muss jedoch ein mehrteiliger, das heist mehrere Segmente umfassender Grundring verwendet werden. Aus bereits vorne erwähnten Gründen sind die Segmente dabei vorzugsweise so ausgestaltet, dass die Schnittlinen zwischen den Segmenten in radialer Richtung verlaufen, wobei kein Stossspiel zwischen den Segmenten vorgesehen ist.

Es versteht sich, dass auch bei der Kolbendichtung mehrere, in axialer Richtung hintereinander angeordnete Dichtelemente 1 als Kolbenringe vorgesehen sein können sowie gegebenenfalls Führungsringe.

Da es für die prinzipiellen Funktion egal ist, ob das erfindungsgemässe Dichtelement 1 mit dem segmentierten Dichtring 2 zur Abdichtung der Kolbenstange 6 oder zur Abdichtung des Kolbens 40 eingesetzt wird, gelten die folgenden Erläuterungen in sinngemäss gleicher Weise für beide Fälle.

Durch die spezielle Ausgestaltung der Ringsegmente 21 (Fig. 1), die im zusammengesetzten Zustand dazu führt, dass die Schnittlinie 22 zwischen zwei benachbarten Ringsegmenten 21 mit der Tangente 23 an die innere Mantelfläche den von 90° verschiedenen Schnittwinkel α bilden, hat der Dichtring 2 keine durchgängigen Spalte in radialer Richtung. Bei Betrieb des Kompressors werden die einzelnen Ringsegmente 21 durch den Differenzdruck p entlang der Schnittlinien 22 gegeneinander gepresst, sodass der Dichtring 2 eine Abdichtung sowohl in radialer als auch in axialer Richtung ermöglicht. Um eine möglichst gute Abdichtung zwischen den einzelnen Ringsegmenten 21 zu erzielen, ist es vorteilhaft, den Schnittwinkel α kleiner als 45° und insbesondere kleiner als 20° auszugestalten. Eine besonders gute Abdichtung lässt sich mit dem Schnittwinkel α=0° (tangentialer Schnitt) erzielen. Da hierbei jedoch die Gefahr besteht, dass die dünnen Spitzen der Ringsegmente 21 Schaden nehmen können, ist für viele Anwendungen ein Schnittwinkel α von etwa 15° besonders günstig.

Durch den Verlauf der Schnittlinien 22 zwischen den Ringsegmenten 21 erfolgt im Betriebszustand ferner eine Verschleisskompensation. Der durch Abrieb bedingte Materialverschleiss an der Reibfläche 24 bzw. 27 wird durch eine Selbstnachstellung der Ringsegmente 21 kompensiert, weil sich diese unter dem auf ihnen lastenden Differenzdruck p gegeneinander verschieben können, sodass der Anpressdruck auf den Gegenlaufpartner (die Kolbenstange 6 oder die Zylinderlaufbahn 42) erhalten bleibt. Durch diese Verschleisskompensation lässt sich die Standzeit des Dichtelements 1 bei dauerhaft niedriger Leckage deutlich verlängern.

Das Dichtelement 1 bzw. der Dichtring 2 und der Grundring 3 werden vorzugsweise im wesentlichen aus einem Hochtemperaturpolymer wie Polyetheretherketon (PEEK), Polyimid (PI), Polyamidimid (PAI), Polyphenylensulfid (PPS) oder Epoxidharz (EP) hergestellt. "Im wesentlichen" bedeutet dabei, dass das Hochtemperaturpolymer in einer für den Trockenlauf geeigneten Modifizierung verwendet wird, das heisst, ihm sind Festschmierstoffe wie Kohle, Grafit, Molybdänsulfid (MoS₂), PTFE, usw. beigefügt. Hochtemperaturpolymere weisen eine hohe mechanische Festigkeit auch bei den im Trockenlauf üblichen Temperaturen auf (hohe Warmfestigkeit). Zudem weisen sie praktisch keinen Kaltfluss auf, sodass sie auch bei hohen Drücken formstabil sind, ohne dass dafür zusätzliche Massnahmen, wie z. B. ein Stützring, vonnöten sind. Ferner haben Hochtemperaturpolymere ein erheblich höheres Elastizitätsmodul als beispielsweise PTFE, sodass sie eine hohe Steifigkeit und eine hohe mechanische Belastbarkeit des Dichtelements 1 ermöglichen.

Der Dichtring 2 und der Grundring 3 können z. B. in bekannter Weise mittels spanender Bearbeitungstechniken aus einem platten- oder stabförmigen Halbzeug herausgearbeitet werden. Alternativ können sie auch mittels Spritzgiessverfahren hergestellt werden. Insbesondere beim Spritzgiessen ist es durch entsprechende Ausgestaltung der Giessform auch möglich, die einzelnen Ringsegmente 21 jeweils getrennt herzustellen.

Eine andere, ebenfalls bevorzugte Möglichkeit besteht darin, den Dichtring 2 und/oder den Grundring 3 aus einer technischen Keramik wie z. B. Aluminiumoxid, Zirkonoxid, Siliziumkarbid, siliziumnitrid, usw. herzustellen. Solche technischen keramischen Werkstoffe weisen eine enorm hohe Abriebfestigkeit auf, wodurch sich die Standzeit des Dichtelements noch deutlich steigern lässt.

Der Dichtring 2 und der Grundring 3 können, müssen aber nicht aus dem gleichen Material gefertigt sein.

Es ist ein wesentliches Merkmal des erfindungsgemässen Dichtelements 1, dass die axiale Höhe H1 des Dichtrings 2 höchstens 5.5 mm und insbesondere zwischen 2 mm und 4.5 mm beträgt. Überraschend ist hierbei die Feststellung, dass sich durch die im Vergleich zu bekannten Dichtelementen reduzierte axiale Höhe H1 in Kombination mit der nicht-radialen Schnittführung zwischen den Ringsegmenten 21 eine ganz erhebliche Leistungssteigerung erzielen lässt. Das erfindungsgemässe Dichtelement kann auf Dauer pv-Werten standhalten, die mindestens fünfmal so gross sind, wie die mit bekannten Dichtelementen erzielbaren. Bei konstant gehaltener mittlerer Kolbengeschwindigkeit bedeutet dies, dass in einem trockenlaufenden Kolbenkompressor Enddrücke von über 200 bar erzielbar sind. Besonders vorteilhaft ist ferner, dass trotz der erheblichen Leistungssteigerung der Verschleiss des erfindungsgemässen Dichtelements 1 im Betriebszustand extrem gering ist, sodass sich sehr lange Standzeiten, beispielsweise einige tausend Betriebsstunden, erzielen lassen.

Es zeigt sich, dass es insbesondere bei hohen pv-Werten von beispielsweise mehr als 140 bar·m/s einen besonders günstigen Kompromiss zwischen niedriger Leckrate und niedriger Temperatur in der Reibfläche gibt, wenn die axiale Höhe des Dichtrings 2 etwa 4 mm beträgt.

Im Hinblick auf eine möglichst geringe Leckrate ist es besonders günstig, wenn das Dichtelement 1, wie vorne beschrieben, zusätzlich zu dem Dichtring 2 den Grundring 3 enthält, der berührungsfrei bezüglich des Gegenlaufpartners angeordnet ist. Durch die Kombination aus Dichtring 2 und Grundring 3 lässt sich die Leckrate des Dichtelements 1 noch weiter reduzieren, sodass selbst bei der Verdichtung sehr leichter Gase wie z. B. Wasserstoff in Trockenlaufsystemen selbst bei hohen Enddrücken Dichtwirkungen erzielbar sind, welche die von konventionellen Dichtelementen übertreffen.

Die axiale Höhe des berührungsfrei arbeitenden Grundrings 3 kann prinzipiell beliebig ausgestaltet sein. Aus Gründen der Platzersparnis ist es jedoch vorteilhaft, wenn die axiale Höhe H2 höchstens 6 mm und insbesondere etwa 4 mm beträgt. Somit beträgt die gesamte axiale Höhe H1+H2 der Kombination aus Grundring 3 und Dichtring 2 in der besonders bevorzugten Ausgestaltung lediglich etwa 8 mm. Dank dieser schmalen Gesamthöhe lassen sich im Vergleich zu Standard-Kolbenstangendichtungen oder - Kolbendichtungen bei einem vorgegebenen Bauraum mehr Dichtelemente unterbringen, wodurch die gesamte Standzeit des Dichtelementsatzes überproportional steigt.

Das erfindungsgemässe Dichtelement zeichnet sich dadurch aus, dass es in Trockenlaufsystemen sehr hohen pv-Werten auf Dauer standhält und dabei nur einen sehr geringen Verschleiss und niedrige Leckraten aufweist.

## Patentansprüche

1. Dichtelement für Trockenlaufsysteme, insbesondere trockenlaufende Kolbenkompressoren, mit einem segmentierten Dichtring (2), welcher eine innere Mantelfläche (24) und eine äußere Mantelfläche (27) auf weist und mindestens zwei in seiner Umfangsrichtung benachbart angeordnete Ringsegmente (21) umfasst, wobei sich im zusammengesetzten Zustand des Dichtrings (2) jeweils zwei benachbarte Ringsegmente (21) entlang einer Schnittlinie (22) berühren, und wobei die Schnittlinie (22) mit einer Tangente (23) an die innere Mantelfläche (24) des Dichtrings (2) einen Schnittwinkel (α) bildet, der von 90° verschieden ist, **dadurch gekennzeichnet, dass** die Schnittlinie (22) geradlinig von der äußeren Mantelfläche (27) bis zur inneren Mantelfläche (24) verläuft, und dass der Dichtring (2) eine axiale Höhe (H1) aufweist, die höchstens 5.5 mm, insbesondere zwischen 2 mm und 4.5 mm, beträgt.

2. Dichtelement nach Anspruch 1, ausgestaltet als Kolbendichtung, indem die äussere Mantelfläche (27) der Ringsegmente (21) dem Verlauf der inneren Wandung des Zylinders (41) angepasst ausgestaltet ist.

3. Dichtelement nach Anspruch 1, ausgestaltet als eine Kolbenstangendichtung, indem die innere Mantelfläche (24) der Ringsegmente (21) zur Auflage auf einer Kolbenstange (6) ausgestaltet ist.

4. Dichtelement nach einem der vorhergehenden Ansprüche , wobei der Dichtring (2) aus drei Ringsegmenten (21) besteht.

5. Dichtelement nach einem der vorangehenden Ansprüche, wobei die axiale Höhe (H1) des Dichtrings (2) etwa 4 mm beträgt.

6. Dichtelement nach einem der vorangehenden Ansprüche, wobei der Schnittwinkel (α) höchstens 45°, insbesondere höchstens 20°, beträgt.

7. Dichtelement nach einem der vorangehenden Ansprüche mit einem Grundring (3) zur Reduzierung der Leckrate.

8. Dichtelement nach Anspruch 7, bei welchem der Grundring (3) einstückig, insbesondere endlos, ausgestaltet ist.

9. Dichtelement nach Anspruch 7 oder 8, wobei der Grundring (3) eine axiale Höhe (H2) von höchstens 6 mm, insbesondere von etwa 4 mm, aufweist.

10. Dichtelement nach einem der vorangehenden Ansprüche, wobei der Dichtring (2) und/oder der Grundring (3) im wesentlichen aus einem Hochtemperaturpolymer wie Polyetheretherketon (PEEK), Polyimid (PI), Polyamidimid (PAI), Polyphenylensulfid (PPS) oder Epoxidharz (EP) hergestellt ist.

11. Dichtelement nach einem der vorangehenden Ansprüche, wobei der Dichtring (2) und/oder der Grundring (3) aus einer technischen Keramik wie Aluminiumoxid, Zirkonoxid, Siliziumkarbid, Siliziumnitrid hergestellt ist.

12. Packung (10) zur Abdichtung einer trockenlaufenden Kolbenstange (6) mit einem Dichtelement (1) gemäss einem der vorangehenden Ansprüche.

13. Kolbendichtung für einen trockenlaufenden Kolbenkompressor mit einem Dichtelement (1) gemäss einem der Ansprüche 1, 2 oder 4-11, wenn von Anspruch 2 abhängig.

14. Kolbenkompressor mit einem Dichtelement (1) gemäss einem der Ansprüche 1-11.

15. Verwendung eines Dichtelements gemäss einem der Ansprüche 1-11 zur Abdichtung der Kolbenstange (6) und/oder des Kolbens (40) in einem trockenlaufenden Kolbenkompressor, der bei pv-Werten von mehr als 140 bar·m/s betreibbar ist.

## Claims

1. Sealing element for dry running systems, in particular for dry running piston compressors, comprising a segmented sealing ring (2) which has an inner jacket surface (24) and an outer jacket surface (27) and which has at least two ring segments (21) arranged adjacently in its circumferential direction, with two adjacent ring segments (21) contacting one another in the assembled state along an interface line or cut line (22), and the interface line or cut line (22) subtends an intersection angle (α) which is different from 90° to a tangent (23) at the inner jacket surface (24) of the sealing ring (2), **characterised in that** the interface line or cut line (22) extends in a straigth line from the outer jacke surface (27) to the inner jacket surface (24), and that the sealing ring (2) has an axial height (H1) which amounts to at most 5.5 mm, in particular to between 2 mm and 4.5 mm.

2. Sealing element in accordance with claim 1, built as a piston seal, in that the outer jacket surface (27) of the ring segments (21) is adapted to the shape of the inner wall of the zylinder (41).

3. Sealing element in accordance with claim 1, built as a piston rod seal, in that the inner jacket surface (24) of the ring segments (21) is adapted to lie on a piston rod (6).

4. Sealing element in accordance with one of the preceding claims, with the sealing ring (2) consisting of three ring segments (21).

5. Sealing element in accordance with one of the preceding claims, with the axial height (H1) of the sealing ring (2) amounting to about 4 mm.

6. Sealing element in accordance with one of the preceding claims, with the intersection angle (α) amounting to at most 45°, in particular to at most 20°.

7. Sealing element in accordance with one of the preceding claims, comprising a base ring (3) for the reduction of the leakage rate.

8. Sealing element in accordance with claim 7, in which the base ring (3) is executed in a single piece, in particular as an endless, or gapless ring.

9. Sealing element in accordance with claim 7 or claim 8, with the base ring (3) having an axial height (H2) of at most 6 mm, in particular of about 4 mm.

10. Sealing element in accordance with one of the preceding claims with the sealing ring (2) and/or the base ring (3) being manufactured substantially of a high-temperature polymer such as poly(ether ether ketone) (PEEK), polyimide (PI), polyamidimide (PAI), poly(phenylene sulphide) (PPS), or an epoxy resin (EP).

11. Sealing element in accordance with one of the preceding claims with the sealing ring (2) and/or the base ring (3) being manufactured of a technical ceramic such as aluminium oxide, zirconium oxide, silicon carbide or silicon nitride.

12. Packing (10) for the sealing of a dry running piston rod (6) comprising a sealing element (1) in accordance with one of the preceding claims.

13. Piston ring for a dry running piston compressor comprising a sealing element (1) in accordance with one of the claims 1, 2 or 4-11, when depending on claim 2.

14. Piston compressor with a sealing element (1) in accordance with one of the claims 1 to 11.

15. Use of a sealing element in accordance with one of the claims 1 to 11 for the sealing of a piston rod (6) and/or the piston (40) in a dry running piston compressor which can be operated at pv values of more than 140 bar·m/s.

## Revendications

1. Elément d'étanchéité pour des systèmes de marche à sec, notamment des compresseurs à piston fonctionnant à sec, avec une bague d'étanchéité segmentée (2) qui présente une face d'enveloppe interne (24) et une face d'enveloppe externe (27) et au moins deux segments annulaires (21) disposés de manière avoisinante dans sa direction périphérique, où à l'état assemblé de la bague d'étanchéité (2), respectivement deux segments annulaires avoisinants (21) se touchent le long d'une ligne de coupe (22), et où la ligne de coupe (22) forme avec une tangente (23) à la face d'enveloppe interne (24) de la bague d'étanchéité (2) un angle de coupe (a) qui est différent de 90°, **caractérisé en ce que** la ligne de coupe (22) s'étend d'une manière rectiligne de la face d'enveloppe externe (27) jusqu'à la face d'enveloppe interne (24), et **en ce que** la bague d'étanchéité (2) présente une hauteur axiale (H1) qui est au maximum de 5,5 mm, et qui est notamment comprise entre 2 mm et 4,5 mm.

2. Elément d'étanchéité selon la revendication 1, réalisé comme garniture de piston, en ce que la face d'enveloppe externe (27) des segments annulaires (21) est réalisée pour s'adapter à l'allure de la paroi interne du cylindre (41).

3. Elément d'étanchéité selon la revendication 1, réalisé comme une garniture de tige de piston, en ce que la face d'enveloppe interne (24) des segments annulaires (21) est réalisée pour l'application sur une tige de piston (6).

4. Elément d'étanchéité selon l'une des revendications précédentes, où la bague d'étanchéité (2) est constituée de trois segments annulaires (21).

5. Elément d'étanchéité selon l'une des revendications précédentes, où la hauteur axiale (H1) de la bague d'étanchéité (2) est d'environ 4 mm.

6. Elément d'étanchéité selon l'une des revendications précédentes, où l'angle de coupe (α) est au maximum de 45°, en particulier au maximum de 20°.

7. Elément d'étanchéité selon l'une des revendications précédentes, avec une bague de base (3) pour réduire le taux de fuite.

8. Elément d'étanchéité selon la revendication 7, où la bague de base (3) est réalisée en une pièce, notamment sans fin.

9. Elément d'étanchéité selon la revendication 7 ou 8, où la bague de base (3) présente une hauteur axiale (H2) au maximum de 6 mm, notamment d'environ 4 mm.

10. Elément d'étanchéité selon l'une des revendications précédentes, où la bague d'étanchéité (2) et/ou la bague de base (3) est fabriquée essentiellement en un polymère haute température, comme en polyéther éther cétone (PEEK), en polyimide (PI), en polyamidimide (PAI), en polyphénylènesulfure (PPS) ou en résine époxy (EP).

11. Elément d'étanchéité selon l'une des revendications précédentes, où la bague d'étanchéité (2) et/ou la bague de base (3) est fabriquée en une céramique technique comme en oxyde d'aluminium, en oxyde de zircone, en carbure de silicium, en nitrure de silicium.

12. Garniture (10) pour rendre étanche une tige de piston (6) fonctionnant à sec avec un élément d'étanchéité (1) selon l'une des revendications précédentes.

13. Garniture d'étanchéité de piston pour un compresseur à piston fonctionnant à sec avec un élément d'étanchéité (1) selon l'une des revendications 1, 2 ou 4-11 lorsqu'elles dépendent de la revendication 2.

14. Compresseur à piston avec un élément d'étanchéité (1) selon l'une des revendications 1 à 11.

15. Utilisation d'un élément d'étanchéité selon l'une des revendications 1 à 11 pour rendre étanche la tige de piston (6) et/ou le piston (40) dans un compresseur à piston fonctionnant à sec qui peut être amené à fonctionner à des valeurs pv supérieures à 140 bar. m/s.
